# EUROPEAN PATENT APPLICATION

(11) **EP 0 569 916 A2**
(43) Date of publication of application: **18.11.1993**
(21) Application number: 93107590.7
(22) Date of filing: 10.05.1993
(51) Int. Cl.: F16D 65/60

(54) **Wear compensation mechanism for an expanding shoe brake**

(30) Priority: 11.05.1992 IT TO920397
(71) Applicant: CIECI S.R.L, I-10070 Robassomero (Torino) (IT)
(72) Inventor: Patriti, Onorato, I-10093 Collegno (Torino) (IT)
(74) Representative: Spandonari, Carlo, Dr. Ing.

(57) **Abstract**

In the control lever of an expanding shoe brake is freely journaled a wormwheel engageable with the driving shaft of an operating cam of a shoe brake. The worm wheel (12) being angularly fastened by engagement with a worm screw (16). A sprocket (40) coaxial with the worm screw is in unidirectional engagement with it through a freewheel mechanism (36, 38, 42, 44) and is displaced forward and backward by a rack (54) driven by a pawl integral with the brake carrier for causing a corresponding rotation of the worm wheel (16) when the displacement of the control lever exceeds a predetermined value. According to the invention, the rotation of the worm wheel (16) causes successive incremental displacements of an abutment (20) of said freewheel mechanism up to a terminal position of disengagement.

## Description

This invention relates to a wear compensation mechanism for an expanding shoe brake, particularly for heavy vehicles such as trucks, trailers and the like, and more particularly it relates to improvements which enhance the safety of such brakes.

As well known, the shoe brake is operated by a lobe cam which, on rotation, drives apart the shoes by the push of its opposed lobes and presses them on an external drum, against the bias of a spring. As the friction liners borne by the shoes wear out, the effectiveness of the braking action is reduced, for a given rotation of the cam, i.e. for a given travel of the brake pedal.

In order to overcome the problem of wear, wear compensation mechanisms have been proposed. With these mechanisms, the angular position of the cam at rest is progressively advanced, so that, for a given travel of the pedal, the cam reaches a farther position in rotation, and consequently a larger expansion of the shoes. The angle that the rest position of the cam has been shifted with respect to its initial zero position is shown by the displacement of a marker in the brake lever at each wheel, so that the maintenance personnel can find out if it is time to change the liners.

Such known mechanisms, however, have a serious drawback. Since they maintain a uniform braking effectiveness up to the limit of complete wear of the liners, the driver has no indirect indication of the condition of the brakes while driving, as is the case when no compensation of the wear is provided. Such indication can only be obtained by a deliberate inspection of the above-mentioned marker at each wheel. If, due to negligence in checking or to nonavailability of parts, the liners are not replaced in due time, the action of the compensation mechanism can continue until the rest position of the cam overtakes the limit of reversibility in the expansion movement, thus preventing the spring from pulling back the shoes. Consequently, in the occasion of a powerful braking operation, one or more of the wheels will be locked in a braked condition, the driver having no way of unlocking them: obviously, such circumstance may lead to catastrophic consequences.

The main object of the invention is therefore to improve the known wear compensation mechanism, by not allowing such condition of brake irreversibility to be reached, even if maintenance is neglected, i.e. even if the liners are completely worn out.

Another object is to provide an indication of terminal wear of the liners which operates automatically, i.e. without the need for a deliberate checking operation by the driver.

The invention attains the above and other objects and advantages, such as will appear from the following disclosure, with a control lever of an expanding shoe brake, in which is freely journaled a wormwheel engageable with the driving shaft of an operating cam of a shoe brake, the worm wheel being angularly fastened by engagement with a worm screw, and in which a sprocket coaxial with the worm screw is in unidirectional engagement with it through a freewheel mechanism and is displaced forward and backward by stationary pushing means for causing a corresponding rotation of the worm wheel when the displacement of the control lever exceeds a predetermined value, characterized in that the rotation of the worm wheel causes successive incremental displacements of an abutment of said freewheel mechanism up to a terminal position of disengagement.

The invention will now be described in more detail with reference to preferred embodiments shown in the attached drawings, which are provided as an illustrative and nonlimiting example, and wherein:
Fig. 1 is a front view of a drum brake lever according to a preferred embodiment of the invention;
Fig. 2 is a side view in the direction of arrow II on Fig. 1;
Fig. 3 is a view in cross-section made along line III-III of Fig. 2, partially broken away;
Fig. 4 is a view in cross-section made along line IV-IV of Fig. 3, on an enlarged scale;
Fig. 5 is a side view of a rack belonging to the lever of Fig. 1;
Fig. 6 is a view in axial cross-section of a pinion belonging to the lever of Fig. 1;
Fig. 7 is a view in cross-section made along line VII-VII of Fig. 3, on an enlarged scale.

In the Figures, reference number 10 is a brake lever for a truck wheel, which can be operated in a known way by the braking system of the vehicle (not shown). The body of brake lever 10 rotatably accommodates a worm wheel 12, having internal splines for engagement with a shaft (not shown) of a cam of a shoe brake of the associated wheel, in a way known per se.

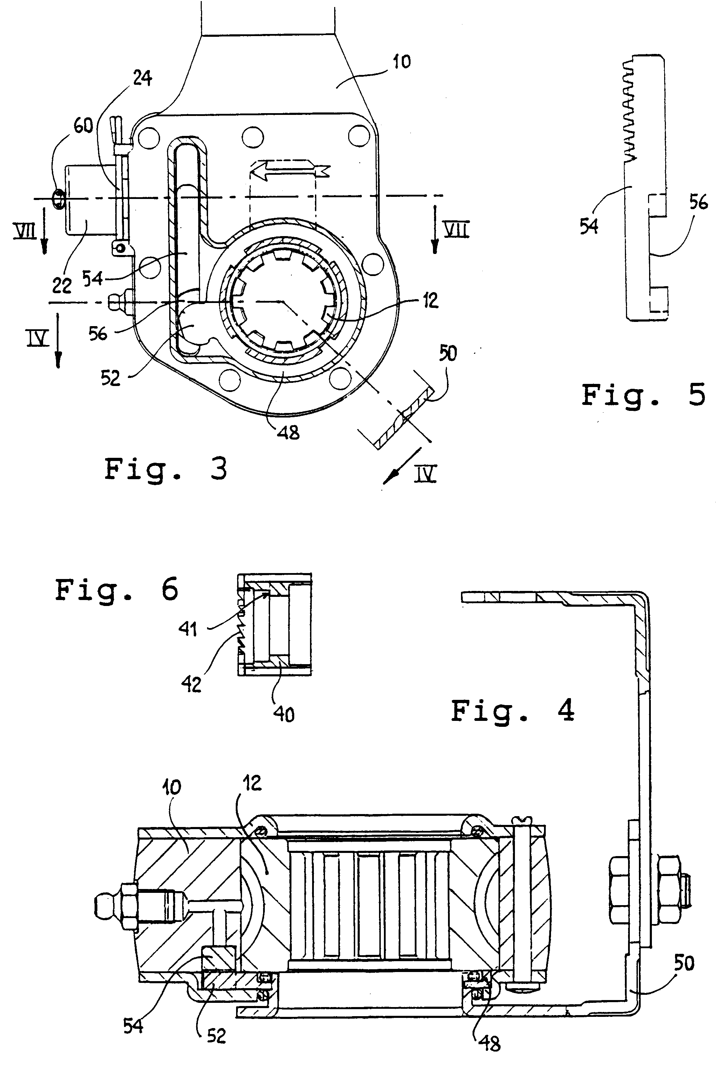

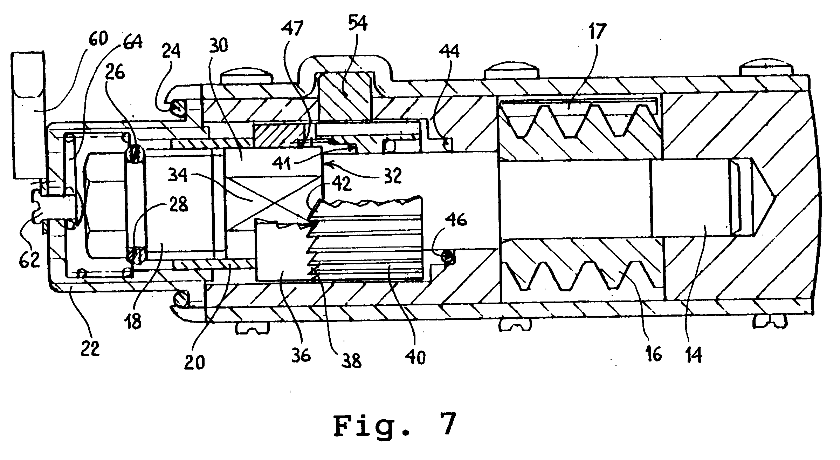

With particular reference to Figs. 4 and 7, a rotatable shaft 14 is mounted across the body of brake lever 10. Shaft 14 carries a worm screw 16, which engages worm wheel 12. Rotation of worm screw 16 is frictioned by a blade spring 17, in order to prevent accidental shifts of shaft 14, due to vibrations and the like.

One end 18 of shaft 14 is threaded and is engaged in a nut 20, which is kept angularly fixed with respect to the body of lever 10 by the engagement with a polygonal cup 22, the latter being retained on lever 10 by a clip 24. The threaded portion 18 of shaft 14 is delimited at the rear by a groove 26 in which an elastic ring 28 is received.

Near the threaded portion 18, shaft 14 has a land 30, which is separated from the adjacent portion of the shaft by a ledge 32 and which has two flat faces 34. A collar 36 is mounted on land 30, which is free to slide axially but which is retained angularly, due to the engagement with flat faces 34. Collar 36 has an annular, saw-toothed serration 38.

Further, an idle sprocket 40 is journaled on shaft 14, also having an annular, saw-toothed serration 42 facing serration 38 on collar 36. Sprocket 40 has an internal ledge 41 facing ledge 32 on shaft 14.

A wound spring 44 is compressed between sprocket 40 and a ledge 46 on the body of lever 10 to bias sprocket 40 against collar 36, so that the latter abuts against nut 20, thus maintaining both saw-toothed serrations 38, 42 mutually engaged. Moreover, a weaker wound spring 47, which is normally overridden by spring 44, is interposed between sprocket 40 and collar 36, for purposes explained below.

A rotatable ring 48 is idle in the lever body 10, coaxial to worm wheel 12 but disengaged from the latter, and is made fast, e.g. by calking, with a bracket 50 which is integral with a stationary portion of the vehicle wheel carrier (not shown), as known per se. A pawl 52 projects radially from rotatable ring 48.

The side tooths of sprocket 40 are engaged with a rack 54 slidable in lever body 10, transversely to the axis of shaft 14. Rack 54 has a cavity 56 in loose engagement with pawl 52.

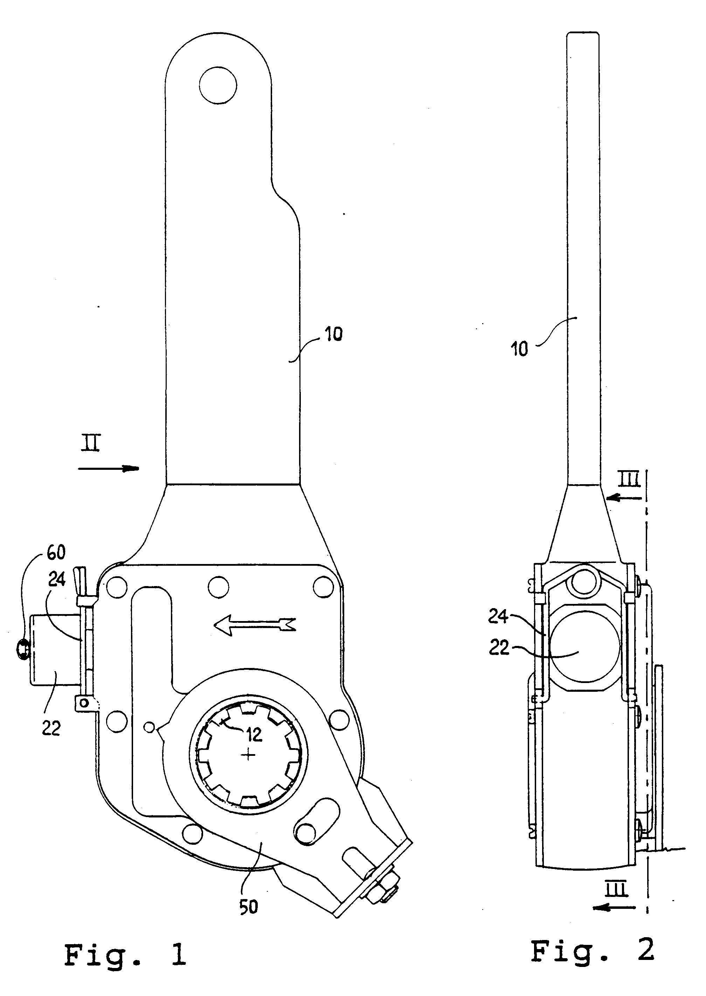

When, during a braking operation, lever 10 is rotated counterclockwise in Fig. 1, pawl 52 stays stationary and pushes rack 54 upwardly in its seat. The rack in its turn rotates sprocket 40 in a direction for which its saw-toothed serration 42 is disengaged from the corresponding serration on collar 36, overcoming the bias of spring 44. Blade spring 17 insures that shaft 14, and therefore collar 36, both are stationary in spite of the upward push of rack 54 on sprocket 40. When the brake is released, pawl 52 pulls back rack 54 to the position shown on Fig. 1, and through it also sprocket 40.

Normally, the displacement of rack 54 is shorter than the pitch of the saw-toothed serrations, so that the latter do not override one another, and the return of the sprocket merely recovers the slip that took place in the forward travel, without transmitting motion to collar 36.

however, when the wear increase allows lever 10, and therefore rack 54, to travel so far that sprocket 40 during its forward travel overrides a saw-tooth on collar 36, the latter, in the backward travel, will be driven by rack 54 by an angle equal to one tooth of the saw-tooth serration, and will also pull shaft 14 with it. The latter then will unscrew of a small angle from nut 20, so that the nut will move leftward on Fig. 1 by a short increment.

Therefore, as the liners are progressively worn out, nut 20 will move leftward (Fig. 4), while the spring will continue to bias sprocket 40 against collar 36. Eventually, when nut 20 has travelled far enough away from sprocket 40, the latter will abut against ledge 32 on shaft 14, and will not reach to the serration of collar 36, while nut 20 will bear against elastic ring 28, which brakes it to avoid accidental backward rotations due to vibrations or bumps. Both saw-toothed serrations therefore remain disengaged from each other in spite of the bias of the spring. Spring 47, which is now no longer overridden by spring 44, insures that collar 36 and sprocket 40 remain disengaged even in case of vibrations or shocks.

At this point the wear compensation is then terminated, and the danger that the cam is rotated beyond the peaks of its lobes is thus avoided. Obviously, the braking effectiveness also begins to be reduced, but the condition of irreversibility, and the consequent wheel lock mentioned in the introduction, can no longer be reached, if the mechanism is properly designed.

In order to provide the vehicle driver with an automatic signal that the wear compensation mechanism has reached its limit of operation, according to the invention cup 22 is made of an insulating material, and carries an electric terminal 60 which is fixed with a rivet 62. Inside the cup, rivet 62 is extended to form a blade contact 64, which is normally insulated. When nut 20 comes to bear against elastic ring 28, it also touches blade 64, thus grounding terminal 60. This action can be used to close a suitable electric circuit, obvious for a prerson skilled in the art, to provide a signal on the vehicle dashboard.

Numerous modifications can be devised in the above-described mechanism, where functionally equivalent members are substituted for those disclosed above, in order to attain the same objects. For instance, the freewheel mechanism comprising two members having frontal, saw-toothed serrations could be replaced with a ratchet gear, where the gradual displacement of either the gearwheel or the ratchet eventually causes their mutual disengagement, while maintaining a movable abutment which is removed when a predetermined amount of lever rotation is exceeded. Moreover, the nut 20 itself can be replaced with a bushing acting as an abutment to collar 36, and remaining in a fixed position until, when the predetermined rotation of the worm wheel with respect to the brake lever is exceeded, an arm integral with the worm wheel strikes the bushing to displace it and to disengage the collar from the sprocket.

## Claims

1. A control lever of an expanding shoe brake, in which is freely journaled a wormwheel engageable with the driving shaft of an operating cam of a shoe brake, the worm wheel (12) being angularly fastened by engagement with a worm screw (16), and in which a sprocket (40) coaxial with the worm screw is in unidirectional engagement with it through a freewheel mechanism (36, 38, 42, 44) and is displaced forward and backward by stationary pushing means (48, 50, 52, 54) for causing a corresponding rotation of the worm wheel (16) when the displacement of the control lever exceeds a predetermined amount, characterized in that the rotation of the worm wheel (16) causes successive incremental displacements of an abutment (20) of said freewheel mechanism up to a terminal position of disengagement.

2. The control lever of claim 1, characterized in that said freewheel mechanism comprises an annular saw-toothed serration (42) confronting a corresponding annular serration (38) on a collar (36) axially slidable and angularly tied with the axis of the worm screw (16), and said abutment is a nut (20) screwed on a threaded portion of the axis of the worm wheeel, with first elastic means (44) biasing said sprocket to engage with the annular serration of said collar until said sprocket is stopped by a ledge (32) preventing further approach to said collar when the nut (20) has travelled far enough.

3. The control lever of claim 2, characterized in that second elastic means (47), which are weaker than said first elastic means (44) bias the collar (36) away from the sprocket (40).

4. The control lever of claim 2 or 3, characterized in that said nut (20), at the end of the travel away from the collar (36) meets a friction member of a yielding material (28) which prevents the nut from turning backwards.

5. The control lever of one of claims 1 to 5, characterized in that it further comprises a normally open electric contact (64), and in that said abutment closes said electric contact when it reaches said terminal position.

6. The control lever of claim 5, characterized in that said electric contact (64) is normally floating, and said abutment touches said contact to ground it when it reaches said terminal position.
